# EUROPEAN PATENT APPLICATION

(11) **EP 3 618 244 A1**
(43) Date of publication of application: **04.03.2020**
(21) Application number: 18791412.2
(22) Date of filing: 26.04.2018
(51) Int. Cl.: H02K 15/10

(54) **NOVEL INNER RING FEEDING AND TAPING METHOD, INNER RING FEEDING TYPE ROTARY TAPING ASSEMBLY AND TAPING HEAD**

(30) Priority: 26.04.2017 CN 201710284201
(71) Applicant: Gong, Jianlin, Shenzhen, Guangdong 518000 (CN)
(72) Inventor: Gong, Jianlin, Shenzhen, Guangdong 518000 (CN)
(74) Representative: Vitina, Maruta
(86) International application number: PCT/CN2018/084616
(87) International publication number: WO 2018/196807

(57) **Abstract**

The present application relates to a novel inner ring tape feeding and wrapping method, an inner ring tape feeding type rotary tape wrapping assembly and a tape wrapping head. The novel inner ring tape feeding and wrapping method comprises tape feeding and rotary tape wrapping, and a rotary tape wrapping assembly adopts a tape feeding method of inner ring tape feeding. The inner ring tape feeding type rotary tape wrapping assembly comprises a tape winding reel, a double ring gear and a tape feeding roller assembly; the tape winding reel comprises a tape winding reel body and a first support wall and a second support wall which extend outwardly from an outer circumferential surface of the tape winding reel body, the first support wall and the second support wall each has an annular structure, and outer circumferential surfaces of the first support wall, the second support wall and the tape winding reel body enclose a temporary tape storage slot, an opening of the temporary tape storage slot) is facing outwardly, and the outer circumferential surface of the first support wall is provided with a ring of transmission teeth; the double ring gear is rotatably connected to the tape winding reel, and an outer circumferential surface of the double ring gear is also provided with a ring of transmission teeth; the tape feeding roller assembly comprises a tape feeding roller and a tape feeding gear, the tape feeding roller being located between the first support wall and the second support wall, and the tape feeding gear being located outside the second support wall. The tape feeding roller and the tape feeding gear are connected coaxially. The rotary tape wrapping assembly can pass narrow area of the workpiece, improving automation rate of production.

## Description

The present application claims priority to Chinese Patent Application No. CN 201710284201.2, entitled "Novel inner ring tape feeding and wrapping method", filed on April 26, 2017, the entire contents of which are incorporated by reference herein.

### TECHNICAL FIELD

The present application relates to a novel inner ring tape feeding and wrapping method, and also relates to an inner ring tape feeding type rotary tape wrapping assembly and a tape wrapping head, which are especially suitable for automatic tape wrapping operation for insulation wrapping process of formed coil of rail transportation motor.

### BACKGROUND

The tape wrapping method can be divided into two types according to the rotation mode. In one type, the workpiece is fixed while the tape is rotated, and in the other type, the tape is fixed while the workpiece is rotated. At present, in the case of the method in which the workpiece is fixed while the tape is rotated, outer ring tape feeding is adopted, and the tape wrapping seat is mounted on the rotary tape wrapping assembly to rotate together. As a result, the overall size thereof is too large, and the assembly is likely to interfere with the surroundings in a narrow operation space, resulting in a very limited use range.

### SUMMARY

In order to overcome at least one of the defects of the existing outer ring tape feeding wrapping method, the present application provides a novel inner ring tape feeding wrapping method, in which the tape wrapping seat is separated from the rotary tape wrapping assembly, which greatly reduces the volume of the rotary tape wrapping assembly and thus meets the needs of the growing industrial automatic tape wrapping operation.

The technical solution adopted by the present application to solve its technical problems is:
The rotary tape wrapping assembly has a tape feeding operation and an inner ring tape feeding type double drive system, and the rotary tape wrapping assembly comprises a tape winding reel, a double ring gear and a tape feeding roller assembly. The double ring gear is rotatably connected to the tape winding reel, and the tape feeding roller above and at one side of the tape feeding roller assembly is circumferentially distributed on the tape winding reel at the temporary tape storage slots, and the rotation of the tape winding reel causes revolution of the tape feeding roller to form a tape wrapping operation system. The tape feeding gear on another side of the tape feeding roller assembly is meshed with the double ring gear, and the double ring gear drives the tape feeding roller assembly to rotate to realize the inner ring tape feeding system. The novel inner ring tape feeding and wrapping method of the present application comprises the steps of pulling the tape from the tape wrapping seat and connecting it to the workpiece through the tape feeding roller, and the tape rotating with the tape winding reel to perform the tape wrapping operation. The tape feeding roller is a common component of the tape wrapping operation system and the inner ring tape feeding system, and the tape feeding roller revolves to drive the tape to rotate for the tape wrapping operation. The tape feeding roller rotates to drive the tape to be fed from the outer ring of the temporarily stored tape on the winding reel to the inner ring of the temporarily stored tape on the winding reel, to supply the tape required for the tape wrapping operation.

The beneficial effects of the present application comprise reducing the volume of the rotary tape wrapping assembly, realizing automatic tape wrapping operation for insulation wrapping process of formed coil of rail transportation motor, and improving the automation rate of production.

### BRIEF DESCRIPTION OF THE DRAWINGS

In order to more clearly illustrate the technical solutions of the embodiments of the present application, the drawings to be used in the embodiments will be briefly described below. It should be understood that the following drawings show only certain embodiments of the present application, and therefore it should be seen as a limitation on the scope. Those skilled in the art can obtain other related drawings according to these drawings without any inventive operation.

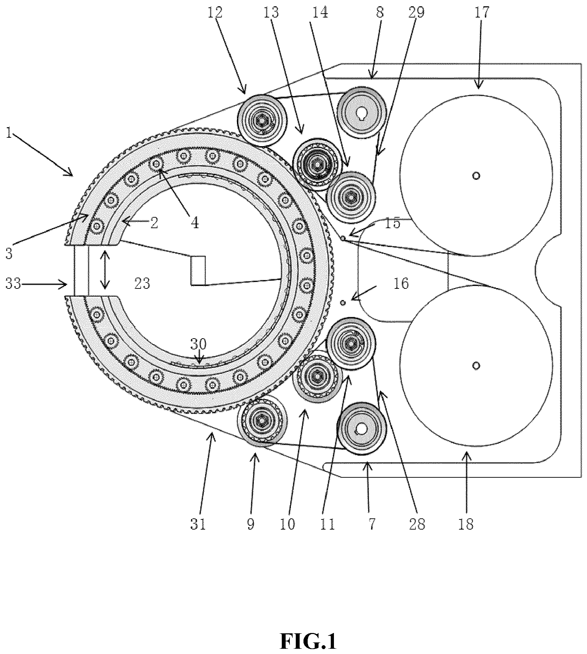

FIG.1 is a schematic view showing the internal structure of a tape wrapping head according to an embodiment of the present application.
FIG. 2 is a schematic view of tape wrapping driving structure of a tape wrapping head according to an embodiment of the present application.
FIG. 3 is a schematic view of a tape feeding driving structure of a tape wrapping head according to an embodiment of the present application.
FIG. 4 is a schematic view of the tape wrapping preparation of the tape wrapping head according to an embodiment of the present application.
FIG. 5 is a schematic view of the principle of the tape wrapping operation of the tape wrapping head according to an embodiment of the present application.
FIG. 6 is a front view and a sectional view of the tape wrapping head according to an embodiment of the present application.
FIG. 7 is a rear view and a left view of the tape wrapping head according to an embodiment of the present application.
FIG. 8 is a front view, right view and sectional view of the key component - rotary tape wrapping assembly 1 of the tape wrapping head according to an embodiment of the present application.
FIG. 9 is a front view, left view and sectional view of the tape winding reel 2 of the tape wrapping head according to an embodiment of the present application.
FIG. 10 is a front view and a sectional view of the double ring gear 3 of the tape wrapping head according to an embodiment of the present application.
Fig. 11 is a schematic view of formed coil of rail transportation motor for description of an embodiment of the tape wrapping head of the present application.

In the drawings:
1-rotary tape wrapping assembly; 2-tape winding reel; 201- tape winding reel body; 202-first support wall; 203-second support wall; 204-projection; 3-double ring gear;4-tape feeding roller assembly; 5-tape feeding roller; 6-tape feeding gear; 7-tape wrapping motor; 8-tape feeding motor; 9-tape wrapping pulley A; 10--tape wrapping pulley B; 11-tape tension adjusting wheel A; 12-tape feeding pulley A; 13-tape feeding pulley B; 14-tape tension adjusting wheel B; 15-tape guiding shaft A; 16-tape guiding shaft B; 17-first tape wrapping seat; 18-second tape wrapping seat; 19-first tape; 20-second tape; 21-inner ring of the temporarily stored tape on the winding reel; 22-outer ring of the temporarily stored tape on the winding reel; 23-C-shaped notch; 24- second tape wrapping through hole; 25-tape wrapping seat motor A; 26-tape wrapping with seat motor B; 27-workpiece; 28-double-sided synchronous belt A; 29-double-sided synchronous belt B; 30-ball bearing; 31-cover plate; 311-first gap; 312-second gap; 32-temporary tape storage slot; 33-temporarily stored tape on the winding reel; 34-ring portion; 35-end portion; 36-straight portion.

### DETAILED DESCRIPTION OF EMBODIMENTS

In the description of the present application, it should also be noted that, unless otherwise specifically stated and defined, the terms "provide", "install", "connected" and "connect" are to be understood broadly, and for example may refer to a fixed connection, a detachable connection or an integral connection; the connection can be direct connection or indirect connection through an intermediate medium, and can be internal communication between two elements. The specific meanings of the above terms in the present application can be understood in specific circumstances for those skilled in the art.

The present application is further described below in conjunction with the accompanying drawings and embodiments.

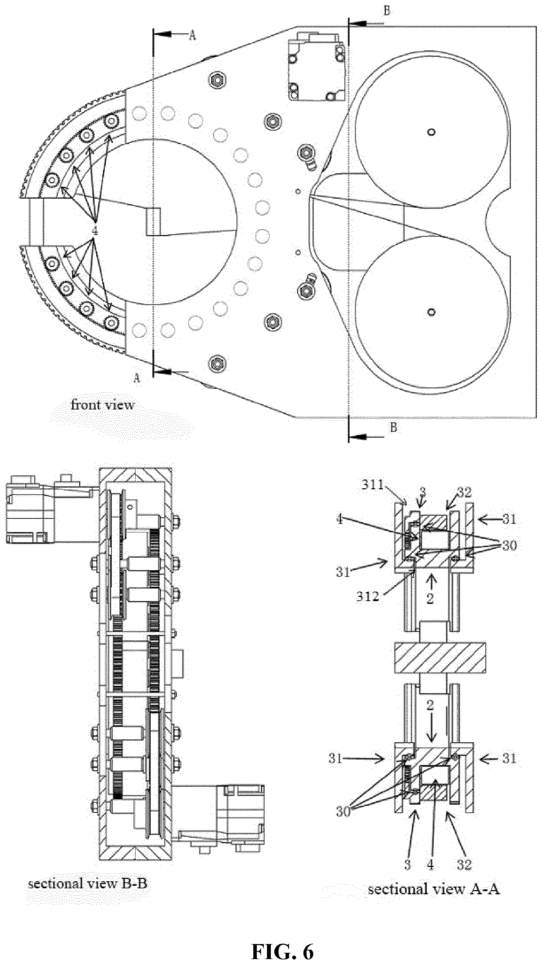

As shown in FIG. 6, the rotary tape wrapping assembly 1 comprises a tape winding reel 2, a double ring gear 3 and a tape feeding roller assembly 4.

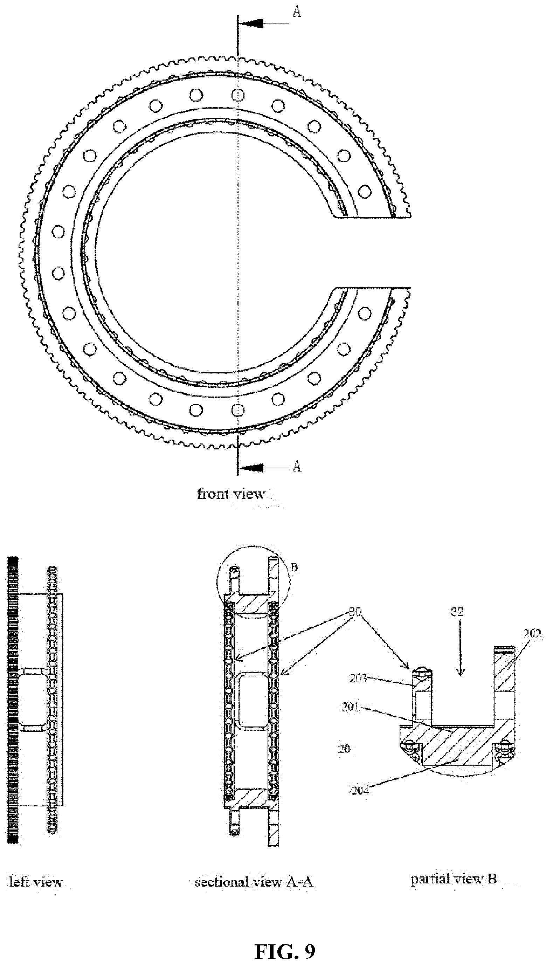

As shown in FIGS. 6 and 9, the tape winding reel 2 comprises a tape winding reel body 201 and a first support wall 202 and a second support wall 203 extending outward from the outer circumferential surface of the tape winding reel body 201. The first support wall 202 and the second support wall 203 each has an annular structure. The outer circumferential surfaces of the first support wall 202 and the second support wall 203 and the tape winding reel body 201 enclose a temporary tape storage slot, and the opening of the temporary tape storage slot is outward. The outer circumferential surface of the first support wall 202 is provided with a ring of transmission teeth.

The double ring gear 3 is rotatably coupled to the tape winding reel 2, and the double ring gear 3 and the tape winding reel 2 are rotatable independently of each other. The double ring gear 3 has a substantially Z-shaped cross section, and the intermediate portion of the double ring gear 3 is engaged with the second support wall 203 of the tape winding reel 2 by the ball bearing 30. The outer diameter of the second support wall 203 is smaller than the outer diameter of the first support wall 202, and the outer diameter of the double ring gear 3 is substantially the same as the outer diameter of the first support wall 202. The outer circumferential surface of the double ring gear 3 is also provided with a ring of transmission teeth.

There are a plurality of tape feeding roller assemblies 4, a total of 22 in this embodiment. In other embodiments, the number of tape feeding roller assemblies 4 can vary. A plurality of tape feeding roller assemblies 4 are mounted within the mounting slots 32 and evenly distributed around the tape winding reel 2.

The tape feeding roller assembly 4 comprises a tape feeding roller 5 and a tape feeding gear 6. The diameter of the tape feeding roller 5 is smaller than the radial depth of the temporary tape storage slot. A tape may be winded around the outer circumferential surface of the tape feeding roller assembly 4 to form a temporarily stored tape on the tape winding reel. The tape feeding roller 5 is located between the first support wall 202 and the second support wall 203, and the tape feeding gear 6 is located outside the second support wall 203. The two ends of the tape feeding roller 5 are rotatably connected to the first support wall 202 and the second support wall 203, respectively, wherein one end of the tape feeding roller 5 passes through the second support wall 203 and is coaxially connected to the tape feeding gear 6 such that when the tape winding reel 6 is rotated, the tape feeding gear 5 rotates together with the tape winding reel 6. Further, the double ring gear 3 has a transmission portion extending to the outer side of the second support wall 203, and the inner circumferential surface of the transmission portion is provided with a ring of transmission teeth, and the inner circumferential surface of the tape gear 6 is meshed with the transmission teeth on the inner circumferential surface of the double ring gear 3.

Further, the tape wrapping head provided in this embodiment comprises the above-mentioned rotary tape wrapping assembly 1 and further comprises a cover plate 31. The cover plate 31 comprises two axial limiting portions, and the tape winding reel 2 is rotatably mounted between the two axial limiting portions. Further, as shown in FIG. 6 and FIG. 9, the axial limiting portion has a substantially L-shaped cross section, and a first gap 311 and a second gap 312 are formed between the two axial limiting portions. The second gap 312is formed closer to the center of the tape winding reel 2. The inner circumferential surface of the tape winding reel 2 near the axial edge is engaged with the axial limiting portion by the ball bearing 30, so that the tape winding reel 2 can be rotated more smoothly with respect to the cover plate 31. Further, the tape winding reel 2 is mostly located in the first gap 311, and the tape winding reel 2 has a projection 204 extending centrally around the tape winding reel body 201. The axial displacement of the tape winding reel 2 relative to the cover plate 31 is limited by the engagement of the projection 204 with the two axial limiting portions.

Further, the tape wrapping head further comprises a tape feeding drive system and a tape wrapping drive system. The tape wrapping drive system is configured to drive the tape winding reel 2 to rotate, and the tape feeding drive system is configured to drive the double ring gear 3 to rotate.

Further, the tape wrapping drive system comprises a tape wrapping pulley A 9, a tape wrapping pulley B 10, a double-sided synchronous belt A and a tape wrapping motor 7.

The tape wrapping pulley A 9 and the tape wrapping pulley B 10 are rotatably connected to the cover plate 31, and the double-sided synchronous belt A is wound around the outer circumferential surfaces of the tape wrapping pulley A 9 and the tape wrapping pulley B 10 and the outer circumferential surface of the rotation shaft of the tape wrapping motor 7. Further, referring to FIG. 6, the tape wrapping pulley A 9, the tape wrapping pulley B 10, the double-sided synchronous belt A 28 and the tape wrapping motor 7 are mounted in an inner cavity formed by the cover plate 31. Further, the tape wrapping drive system further comprises a tape tension adjusting wheel A 11, and the double-sided synchronous belt A 28 is also wound around the outer circumferential surface of the tape tension adjusting wheel A 11.

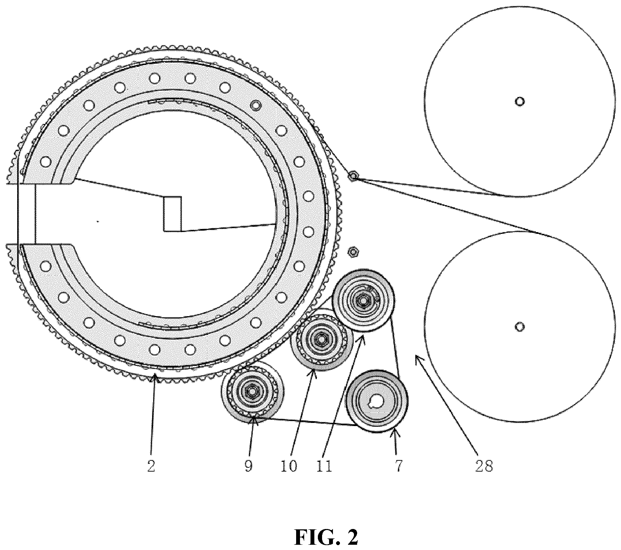

In Fig. 2, the tape wrapping motor 7 is coupled to the tape wrapping pulley A 9, the tape wrapping pulley B 10 and the tape tension adjusting wheel A 11 via a double-sided synchronous belt A 28 to collectively drive the tape winding reel 2.

The tape wrapping motor 7 drives the tape wrapping pulley A 9 and the tape wrapping pulley B 10. The two tape wrapping pulleys are respectively meshed with the outer ring gear of the tape winding reel 2 through the double-sided synchronous belt A 28 and form two meshing points. The length between the two meshing points is greater than the length of the C-shaped notch 23 so that rotation of the tape winding reel 2 can be driven without any trouble, and the tape tension adjusting wheel A 11 adjusts the tension of the driving tape.

Further, the tape feeding drive system comprises a tape feeding pulley A 12, a tape feeding pulley B 13, a double-sided synchronous belt B 29, and a tape feeding motor 8. The tape feeding pulley A 12 and the tape feeding pulley B 13 are rotatably connected to the cover plate 31, and the double-sided synchronous belt B 29 is wound around the outer circumferential surfaces of the tape feeding pulley A 12 and the tape feeding pulley B 13 and the outer circumferential surface of the rotation shaft of the tape feeding motor 8. Further, referring to FIG. 6, the tape feeding A 12, the tape feeding B 13, the double-sided synchronous belt B 29 and the tape feeding motor 8 are mounted in an inner cavity formed by the cover plate 31. Further, the tape feeding drive system further comprises a tape tension adjusting wheel B 14, the double-sided synchronous belt B 29 is also wound around the outer circumferential surface of the tape tension adjusting wheel B 14.

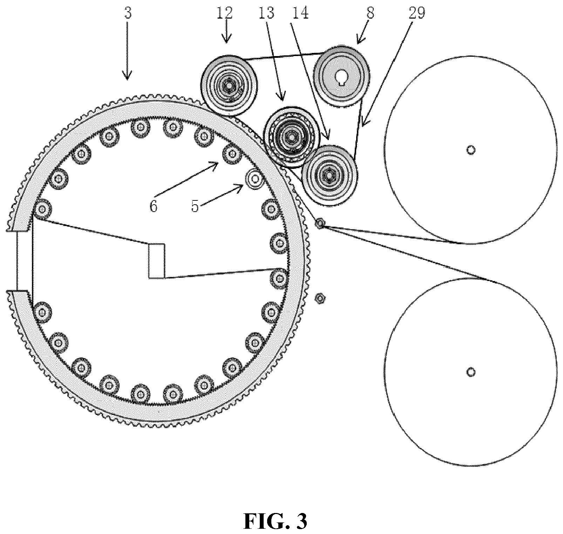

In FIG. 3, the tape feeding motor 8 is connected to the tape feeding pulley A 12, the tape feeding pulley B 13 and the tape tension adjusting wheel B 14 via the double-sided synchronous belt B 29 to collectively drive the double ring gear 3 to rotate, thereby driving the tape gear 6 to cause the tape feeding roller 5 rotate to send the tape.

The tape feeding motor 8 drives the tape feeding pulley A 12 and the tape feeding pulley B 13. Both pulleys are respectively meshed with the outer ring gear of the double ring gear 3 through the double-sided synchronous belt B 29 and form two meshing points. The length between the two meshing points is greater than the length of the C-shaped gap 23 so that the double ring gear 3 can be driven without any trouble, and the tape tension adjusting wheel B 14 adjusts the tension of the driving tape.

Further, the tape wrapping head further comprises a tape guiding shaft A 15 and a tape guiding shaft B 16, the tape guiding shaft A 15 and the tape guiding shaft B 16 are connected to the cover plate 31, and the tape guiding shaft A 15 and the tape guiding shaft B 16 are respectively adjacent to the tape feeding drive system and the tape wrapping drive system. The tape guiding shaft A 15 and the tape guiding shaft B 16 prevent the tape from being caught in other parts.

The first tape wrapping seat 17 and the second tape wrapping seat 18 are mounted to the rear of the rotary tape wrapping assembly 1 and are coupled to the cover plate 31. Since the workpiece, such as the coil, of this embodiment is a closed annular structure, the C-shaped notch 23 provides access for the workpiece 27 and the tape. At the same time as the inner ring wrapping operation of the tape winding reel 2, the outer ring pulls the tape from the tape wrapping seat to the temporary tape storage slot 32 for winding twice to form a temporarily stored tape on the tape winding reel 33. The tape winding reel 2 is connected to the cover plate 31 via a ball bearing 30.

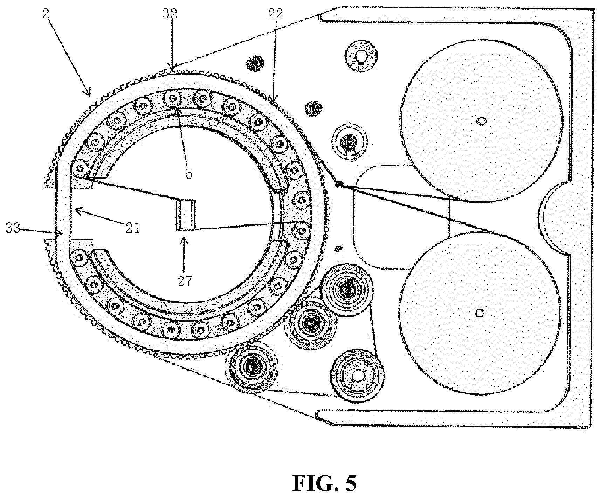

In the case when the first tape wrapping seat 17 and the second tape wrapping seat 18 are both provided, one tape wrapping seat can be selected according to the tape wrapping process requirement for tape wrapping operation of one tape or two tape wrapping seats for tape wrapping operation of two tape simultaneously. If it is necessary to carry out the tape wrapping operation of the two tapes, it is necessary to open on the tape winding reel 2 a second tape through hole through which the tape can pass. Further, in FIG. 5, the through hole has a substantially 180° phase angle with the C-shaped notch. As can be seen from FIG. 9, the second tape through hole is substantially a square hole. Its width is slightly larger than the width of the tape.

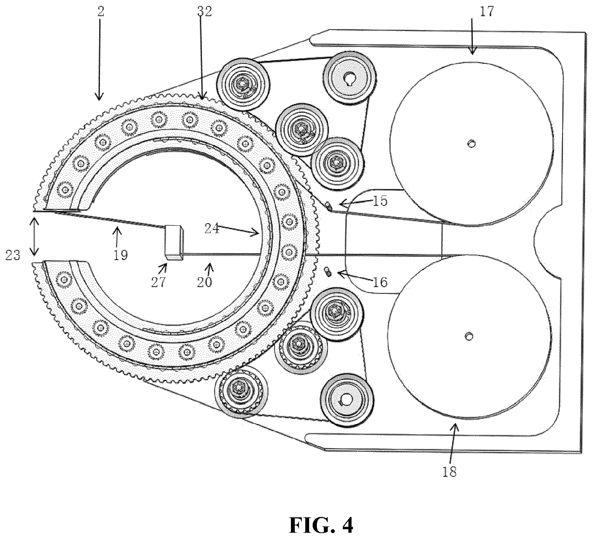

Fig. 4 is a schematic view showing the preparation of the tape wrapping operation of the tape wrapping head according to an embodiment of the present application. In FIG. 4, the status before the tape wrapping operation is shown. During the tape wrapping operation, the first tape 19 is pulled out from the first tape wrapping seat 17 by the operator, passed between the tape guiding shaft A 15 and the tape guiding shaft B 16, passed through the C-shaped notch 23 along the temporary tape storage slot 32 on an upper portion of the tape winding reel 2, and is adhered to the workpiece 27 by adhesive tape. The second tape 20 is pulled out from the second tape wrapping seat 18, passed through the tape guiding shaft A 15 and the tape guiding shaft B 16, then passed through the second tape through hole 24 opposite to the C-shaped notch 23, and is s adhered to the workpiece 27 by adhesive tape.

FIG. 5 is a schematic view of a tape wrapping operation of a tape wrapping head according to an embodiment of the present application. In Fig. 5, the position of the tape after one rotation of the tape winding reel 2 is shown, and the tape winding reel 2 is rotated counterclockwise as shown. At this time, the tape winding reel 2 drives the tape winding reel 5 to revolve, and the tape pulled from the tape wrapping seat is wound around the temporary tape storage slot 32. In the inner ring of the tape storage slot 32, the tape feeding roller 5 drives the tape to rotate around the workpiece for the tape wrapping operation. At the same time, the tape feeding drive system drives the tape feeding roller 5 to rotate, causing the temporarily stored tape on the winding reel 33 wound around it to feed tape from the outer ring of the temporarily stored tape on the winding reel 22 to the inner ring of the temporarily stored tape on the winding reel 21. Since the outer diameter of the workpiece 27 is smaller than the outer diameter of the tape winding reel 2, when the tape winding reel 2 finishes one rotation, the length of the tape consumed by the tape wrapping system is smaller than the length of the tape wound around the temporary tape storage slot 32, so that with the rotation of the tape winding reel 2, the tape will gradually accumulate on the temporary tape storage slot 32, and the accumulated tape of the outer ring of the temporarily stored tape on the winding reel 22 is formed. The tape is fed from the inner ring of the temporarily stored tape on the winding reel 21 to carry out the tape wrapping operation..

FIG. 6 is a front view and a sectional view of the tape wrapping head of the embodiment of the present application. In FIG. 6, the cover plates 31 on both sides are connected to the tape winding reel 2 by two ball bearings 30 to provide rolling support therefor, and the tape winding reel 2 is connected to the double ring gear 3 through a ball bearing 30 to provide rolling support therefor. Twenty two tape feeding roller assemblies 4 are circumferentially distributed on the tape winding reel 2 to form a transmission system for the rotary tape wrapping assembly 1.

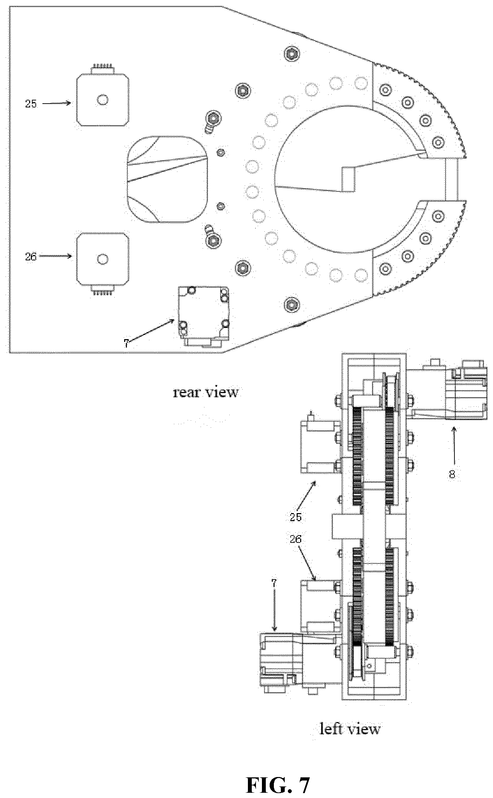

Fig. 7 is a rear view and a left view of the tape wrapping head of the embodiment of the present application. In Fig. 7, the relative positions of the tape wrapping motor 7, the tape feeding motor 8, the tape wrapping seat motor A 25, and the tape wrapping seat motor B 26 are shown. The four motors together form a tape wrapping head motor drive system. The constant tension of the tape wrapping operation is provided by the tape wrapping seat motor at the start of the tape wrapping. As the temporarily stored tape on the winding reel is formed, the tape tension is controlled by the speed difference between the tape wrapping motor 7 and the tape feeding motor 8. After the end of the tape wrapping operation, the tape wrapping seat motor is reversed, and the tape wound around the tape winding reel 2 is taken back.

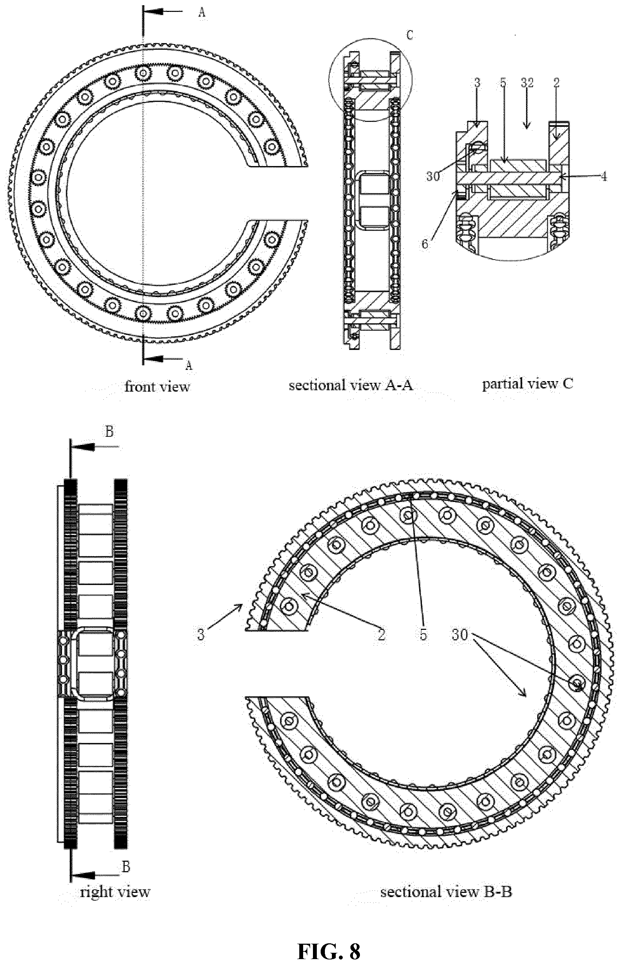

FIG. 8 a front view, right view and sectional view of the key component - rotary tape wrapping assembly 1 of the tape wrapping head according to an embodiment of the present application. In Fig. 8, the tape feeding roller assemblies 4 are each composed of a tape feeding roller 5 and a tape feeding gear 6, and are circumferentially distributed on the tape winding reel 2 at the temporary tape storage slots 32. One side of the inner diameter of the double ring gear 3 is connected to the tape winding reel 2 through the ball bearing 30, and the tooth on the other side of the inner diameter is meshed with the tape feeding gear 6. The tape feeding gear 6 and the tape feeding roller 5 are coaxially driven.

FIG. 9 is a front view, left view and sectional view of the tape winding reel 2 of the tape wrapping head according to an embodiment of the present application. In Fig. 9, the tape storage slot 32 is located in the middle of the tape winding reel 2, and there are three ball bearings 30 on the tape winding reel 2.

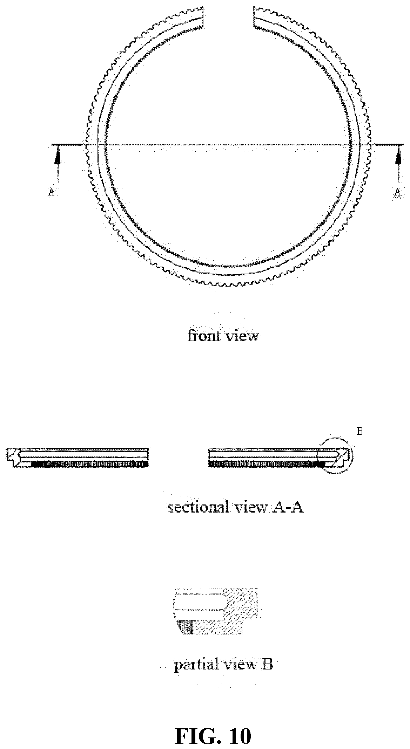

FIG. 10 is a front view and a sectional view of the double ring gear 3 of the tape wrapping head according to an embodiment of the present application. In Fig. 10, the overall structure of the double ring gear 3 is shown.

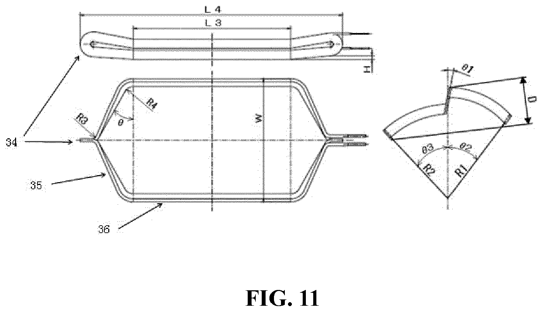

Fig. 11 is a schematic view of formed coil of rail transportation motor for description of an embodiment of the tape wrapping head of the present application. In Fig. 11, the shape of the ring portion 34, the end portion 35, and the straight portion 36 of the coil required for the tape wrapping operation is shown.

In the embodiment of the present application, since the tape wrapping seat is eliminated (in the present application, the tape wrapping seat does not rotate around the workpiece together with the rotary tape wrapping assembly 1), the thickness of the rotary tape wrapping assembly 1 of the tape wrapping head can be designed to be about 36 mm. Compared with the conventional design, the thickness is greatly reduced, and the problem of interference between the existing tape wrapping head and the ring portion 34 of the formed coil of the rail transportation motor is solved, so that the overall automatic insulation tape wrapping of the coil can be realized.

The embodiment further provides a novel inner ring tape feeding wrapping method, which comprises a tape rotating and a tape feeding, and the rotary tape wrapping assembly adopts a tape feeding method of the inner ring tape feeding.

Further, based on the above-mentioned tape wrapping head, at least three types of tape wrapping methods can be implemented:

The first type of wrapping method comprises: pulling the tape from the first tape wrapping seat 17, passing the tape between a tape guiding shaft A 15 and a tape guiding shaft B 16, and then passing the tape through a C-shaped notch 23 along a temporary tape storage slot 32 above the tape winding reel to connect a first tape 19 to the workpiece; and

Driving the tape winding reel 2 to rotate by a tape wrapping motor 7, wrapping the tape around the workpiece, and driving the double ring gear 3 by a tape feeding motor 8 to drive the tape feeding roller assembly 4 on the tape winding reel 2 to rotate to supply tape required for the tape wrapping operation.

The second method of wrapping comprises: pulling the tape from the first tape wrapping seat 17, passing the tape between a tape guiding shaft A 15 and a tape guiding shaft B 16, and then passing the tape through a C-shaped notch 23 along a temporary tape storage slot 32 above the tape winding reel to connect a first tape 19 to the workpiece;

Pulling a second tape 20 to pass between the tape guiding shaft A 15 and the tape guiding shaft B 16, and then passing the second tape through a second tape through hole 24 opposite to the C-shaped notch 23 to connect to the workpiece; and

Driving the tape winding reel 2 to rotate by a tape wrapping motor 7, wrapping the tape around the workpiece, and driving the double ring gear 3 by a tape feeding motor 8 to drive the tape feeding roller assembly 4 on the tape winding reel 2 to rotate to supply tape required for the tape wrapping operation.

The third wrapping method comprises: pulling a second tape 20 to pass between the tape guiding shaft A 15 and the tape guiding shaft B 16, and then passing the second tape through a second tape through hole 24 opposite to the C-shaped notch 23 to connect to the workpiece; and

Driving the tape winding reel 2 to rotate by a tape wrapping motor 7, wrapping the tape around the workpiece, and driving the double ring gear 3 by a tape feeding motor 8 to drive the tape feeding roller assembly 4 on the tape winding reel 2 to rotate to supply tape required for the tape wrapping operation.

Further, before the tape wrapping operation, the robot connected to the tape wrapping head travels to the position of the lead end of the formed coil end portion 35, and the operator pulls the tape from the first tape wrapping seat 17, through between the tape guiding shaft A 15 and the tape guiding shaft B 16, through the C-shaped notch 23 along the temporary tape storage slot 32 on the upper portion of the tape winding reel 2, and adheres the first tape 19 to the coil via adhesive tape. Then the second tape 20 is pulled through between the tape guiding shaft A 15 and the tape guiding shaft B 16, through the second tape through hole 24 opposite to the C-shaped notch 23 and is adhered to the coil by adhesive tape. After the manual operation is finished, the switch is pressed, the tape wrapping motor 7 drives the tape winding reel 2 to rotate, and the tape is wound on the coil. Also, the tape feeding motor 8 drives the double ring gear 3 to cause the tape feeding roller assembly 4 on the tape winding reel 2 to rotate to supply the tape required for the tape wrapping operation. The robot sequentially performs the tape wrapping operation of the end portion 35, the straight portion 36, the end portion 35, the ring portion 34, the end portion 35, the straight portion 36, and the end portion 35 according to a predetermined travelling trajectory until being close to the other lead end. Due to the interference of the lead end, manual processing is required here. Then the remaining tape wrapping operation is continued by the tape wrapping head. After the end of the tape wrapping operation, the tape is cut, and the tape on the coil side is adhered by adhesive tape. The rotary tape wrapping assembly 1 and the tape wrapping seat are reversed, and the tape wound around the tape winding reel 2 is taken back, and different varieties of tape are replaced to continue the operation or the coil is taken out. The tape wrapping head is designed to be with two tape wrapping seats, and therefore which can be selected according to the tape wrapping process requirements, one tape or two tapes can be selected according to tape wrapping process requirements for single tape wrapping or double tapes wrapping.

In the present application, when the tape is used alone, it is a noun, indicating a type of strip that can be used to coat the surface of the workpiece. When the tape wrapping is present with the method or operation, such as the tape wrapping method, the tape wrapping operation, it is a verb, meaning that the tape is wrapped around the surface of the workpiece. The tape wrapping method refers to a method of wrapping the tape on the surface of the workpiece, and the tape wrapping operation refers to an action of wrapping the tape on the surface of the workpiece.

The above description is only for the preferred embodiment of the present application, and is not intended to limit the present application, and various changes and modifications may be made to the present application. Any modifications, equivalent substitutions, improvements, etc. made within the spirit and principles of this application are intended to be comprised within the scope of the present application.

### Industrial applicability

The rotary tape wrapping assembly used in the tape feeding and wrapping method of the present application discards the tape wrapping seat, which means the tape wrapping seat does not rotate around the workpiece together with the rotary tape wrapping assembly, so the overall volume is smaller, and the rotary tape wrapping assembly can pass the narrow end region of the rail transportation motor formed coil, thereby realizing the automatic overall tape wrapping operation of insulation tape wrapping process of the rail transportation motor formed coil and improving the automation rate of production.

## Claims

1. A novel inner ring tape feeding and wrapping method comprising tape feeding and rotary tape wrapping, **characterized in that** a rotary tape wrapping assembly (1) adopts a tape feeding method of inner ring tape feeding.

2. A novel inner ring tape feeding and wrapping method, **characterized in that** it comprises a step of pulling a tape from a tape wrapping seat and connecting the tape to a workpiece via a tape feeding roller, and a step of rotating the tape along with a tape winding reel to carry out tape wrapping operation; the novel inner ring tape feeding and wrapping method adopts a rotary tape wrapping assembly (1) having two drive systems of a tape wrapping operation system and an inner ring tape feeding system, and the tape feeding roller (5) is shared by the tape wrapping operation system and the inner ring tape feeding system, the tape feeding roller (5) revolves to drive the tape to rotate for tape wrapping operation, and the tape feeding roller (5) rotates to drive the tape to be fed from an outer ring of the temporarily stored tape on the winding reel (22) to an inner ring of the temporarily stored tape on the winding reel(21) to supply tape required for tape wrapping operation.

3. The novel inner ring tape feeding and wrapping method according to claim 1 or 2, **characterized in that** the rotary tape wrapping assembly (1) comprises a tape winding reel (2), a double ring gear (3) and a tape feeding roller assembly (4).

4. The novel inner ring tape feeding and wrapping method according to any one of claims 1 to 3, **characterized in that** the double ring gear (3) is rotatably connected to the tape winding reel (2), and the tape feeding roller (5) above and at one side of the tape feeding roller assembly (4) is circumferentially distributed on the tape winding reel (2) at a temporary tape storage slot (32), and the tape winding reel (2) rotates to drive the tape feeding roller (5) to revolve to realize the tape wrapping operation system.

5. The novel inner ring tape feeding and wrapping method according to any one of claims 1 to 4, **characterized in that** the tape feeding gear (6) on another side of the tape feeding roller assembly is meshed with the double ring gear (3), and the double ring gear (3) drives the tape feeding roller assembly (4) to rotate to realize the inner ring tape feeding system.

6. The novel inner ring tape feeding and wrapping method according to any one of claims 1 to 5, **characterized in that** the method comprises:
pulling the tape from the first tape wrapping seat (17), passing the tape between a tape guiding shaft A (15) and a tape guiding shaft B (16), and then passing the tape through a C-shaped notch (23) along a temporary tape storage slot (32) above the tape winding reel to connect a first tape (19) to the workpiece; and
driving the tape winding reel (2) to rotate by a tape wrapping motor (7), wrapping the tape around the workpiece, and driving the double ring gear (3) by a tape feeding motor (8) to drive the tape feeding roller assembly (4) on the tape winding reel (2) to rotate to supply tape required for the tape wrapping operation.

7. The novel inner ring tape feeding and wrapping method according to any one of claims 1 to 5, **characterized in that** the method comprises:
pulling the tape from the first tape wrapping seat (17), passing the tape between a tape guiding shaft A (15) and a tape guiding shaft B (16), and then passing the tape through a C-shaped notch (23) along a temporary tape storage slot (32) above the tape winding reel to connect a first tape (19) to the workpiece;
pulling a second tape (20) to pass between the tape guiding shaft A (15) and the tape guiding shaft B (16), and then passing the second tape through a second tape through hole (24) opposite to the C-shaped notch (23) to connect to the workpiece; and
driving the tape winding reel (2) to rotate by a tape wrapping motor (7), wrapping the tape around the workpiece, and driving the double ring gear (3) by a tape feeding motor (8) to drive the tape feeding roller assembly (4) on the tape winding reel (2) to rotate to supply tape required for the tape wrapping operation.

8. The novel inner ring tape feeding and wrapping method according to any one of claims 1 to 5, **characterized in that** the method comprises:
pulling a second tape (20) to pass between the tape guiding shaft A (15) and the tape guiding shaft B (16), and then passing the second tape through a second tape through hole (24) opposite to the C-shaped notch (23) to connect to the workpiece; and
driving the tape winding reel (2) to rotate by a tape wrapping motor (7), wrapping the tape around the workpiece, and driving the double ring gear (3) by a tape feeding motor (8) to drive the tape feeding roller assembly (4) on the tape winding reel (2) to rotate to supply tape required for the tape wrapping operation.

9. An inner ring tape feeding type rotary tape wrapping assembly, **characterized in that** the assembly comprises a tape winding reel (2), a double ring gear (3) and a tape feeding roller assembly (4);
the tape winding reel (2) comprises a tape winding reel body and a first support wall (202) and a second support wall (203) which extend outwardly from an outer circumferential surface of the tape winding reel body (201), the first support wall (202) and the second support wall (203) each has an annular structure, and outer circumferential surfaces of the first support wall (202), the second support wall (203) and the tape winding reel body enclose a temporary tape storage slot (32), an opening of the temporary tape storage slot (32) is facing outwardly, and the outer circumferential surface of the first support wall (202) is provided with a ring of transmission teeth;
the double ring gear (3) is rotatably connected to the tape winding reel (2), and an outer circumferential surface of the double ring gear (3) is also provided with a ring of transmission teeth;
the tape feeding roller assembly (4) comprises a tape feeding roller (5) and a tape feeding gear (6), the tape feeding roller (5) being located between the first support wall (202) and the second support wall (203), and the tape feeding gear (6) being located outside the second support wall (203); two ends of the tape feeding roller (5) are rotatably connected to the first support wall (203) and the second support wall (203), respectively, wherein one end of the tape feeding roller (5) passes through the second support wall (203) and is coaxially connected to the tape feeding gear (6).

10. The inner tape feeding type rotary tape wrapping assembly according to claim 9, **characterized in that** an outer diameter of the second support wall is smaller than an outer diameter of the first support wall (203), and an outer diameter of the double ring gear (3) is substantially equal to an outer diameter of the first support wall (203).

11. The inner ring tape feeding type rotary tape wrapping assembly according to claim 9 or 10, **characterized in that** a diameter of the tape feeding roller (5) is smaller than a radial depth of the temporary tape storage slot (32).

12. The inner ring tape feeding type rotary tape wrapping assembly according to any one of claims 9 to 11, **characterized in that** the double ring gear (3) has a transmission portion extending to an outer side of the second support wall (203), an inner circumferential surface of the transmission portion is provided with a ring of transmission teeth, and the tape feeding roller (5) is meshed with the transmission teeth at the inner circumferential surface of the double ring gear (3).

13. A tape wrapping head comprising the inner ring tape feeding type rotary tape wrapping assembly according to any one of claims 9 to 12, and further comprising a cover plate (31), wherein the cover plate (31) comprises two axial limiting portions, and the tape winding reel are rotatably mounted between the two axial limiting portions.

14. The tape wrapping head according to claim 13, **characterized in that** a first gap (311) and a second gap (312) are formed between the two axial limiting portions, and the second gap (312) is closer to a center of the tape winding reel (2); the tape winding reel (2) is mostly located in the first gap (311), and the tape winding reel (2) has a projection (204) extending centrally from the tape winding reel body (201); an axial displacement of the tape winding reel (2) relative to the cover plate (31) is limited by engagement of the projection (204) with the two axial limiting portions.

15. The tape wrapping head according to claim 13 or 14, **characterized in that** an axial edge of an inner circumferential surface of the tape winding reel (2) is engaged with the axial limiting portion by a ball bearing (30), so that the tape winding reel (2) can be rotated more smoothly with respect to the cover plate (31).

16. The tape wrapping head according to any of claims 13 to 15, **characterized in that** the tape wrapping head further comprises a tape wrapping drive system and a tape feeding drive system; wherein the tape wrapping drive system is configured to drive the tape winding reel (2) to rotate, and the tape feeding drive system is configured to drive the double ring gear (3) to rotate.

17. The tape wrapping head according to any one of claims 13 to 16, **characterized in that** the tape drive system comprises a tape wrapping pulley A (9), a tape wrapping pulley B (10), a double-sided synchronous belt A (28) and a tape wrapping motor (7); the tape wrapping pulley A (9) and the tape wrapping pulley B (10) are rotatably connected to the cover plate (31), and the double-sided synchronous belt A (28) is wound around outer circumferential surfaces of the tape wrapping pulley A (9) and the tape wrapping pulley B (10) as well as an outer circumferential surface of a rotation shaft of the tape wrapping motor (7).

18. The tape wrapping head according to any one of claims 13 to 17, **characterized in that** the tape wrapping drive system further comprises a tape tension adjusting wheel A (11), and the double-sided synchronous belt A (28) is also wound around an outer circumferential surface of the tape tension adjusting wheel A (11).

19. The tape wrapping head according to any one of claims 13 to 18, **characterized in that** the tape feeding drive system comprises a tape feeding pulley A (12), a tape feeding pulley B (13), a double-sided synchronous belt B (29) and a tape feeding motor (8); the tape feeding pulley A (12) and the tape feeding pulley B (13) are rotatably connected to the cover plate (31), and the double-sided synchronous belt B (29) is wound around outer circumferential surfaces of the tape feeding pulley A (12) and the tape feeding pulley B (13) as well as an outer circumferential surface of a rotation shaft of the tape feeding motor (8).

20. The tape wrapping head according to any one of claims 13 to 19, **characterized in that** the tape feeding drive system further comprises a tape tension adjusting wheel B (14), and the double-sided synchronous belt B (29) is also wound around an outer circumferential surface of the tape tension adjusting wheel B (14).
